Europäisches Patentamt
European Patent Office
Office européen des brevets

(19)

(11) Veröffentlichungsnummer: **0 065 216**
**A1**

(12) # EUROPÄISCHE PATENTANMELDUNG

(21) Anmeldenummer: **82103888.2**

(22) Anmeldetag: **05.05.82**

(51) Int. Cl.³: **C 07 F 9/65**, A 01 N 57/16, A 01 N 57/24, A 01 N 57/32

(30) Priorität: **08.05.81 DE 3118257**

(43) Veröffentlichungstag der Anmeldung: **24.11.82**
**Patentblatt 82/47**

(84) Benannte Vertragsstaaten: **CH DE FR GB IT LI NL**

(71) Anmelder: **HOECHST AKTIENGESELLSCHAFT, Postfach 80 03 20, D-6230 Frankfurt/Main 80 (DE)**

(72) Erfinder: **Kübel, Börries, Dr., Kuckucksweg 14, D-6233 Kelkheim (Taunus) (DE)**
Erfinder: **Sachse, Burkhard, Dr., An der Ziegelei 30, D-6233 Kelkheim (Taunus) (DE)**
Erfinder: **Knauf, Werner, Dr., Im Kirschgarten 24, D-6239 Eppstein/Taunus (DE)**
Erfinder: **Waltersdorfer, Anna, Dr., Rauenthaler Weg 28, D-6000 Frankfurt am Main 71 (DE)**

(54) **Pestizide S-(1.2.4-Triazol-5-ylmethyl)-(di)-thiophosph(on)ate und Verfahren zu ihrer Herstellung.**

(57) Phosphor- bzw. Phosphonester(amide) der Formel

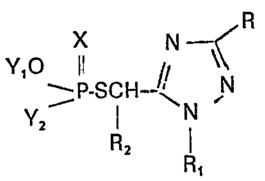

worin R = H, (subst.) Alkyl, (subst.) Phenyl, (subst.) Benzyl, (subst.) Phenylethyl oder Alkylthio; $R_1$ = H, Alkyl, Cycloalkyl, Cyanethyl, Benzyl oder Alkenyl, $R_2$ = H oder $CH_3$, X = O oder S, $Y_1$ = Alkyl und $Y_2$ = Alkoxy, Alkylthio, (Di)-alkylamino, Alkyl oder Phenyl bedeuten, sowie deren Salze mit Säuren sind wirksame Insektizide, Akarizide, Nematozide und Fungizide.

EP 0 065 216 A1

0065216

HOECHST AKTIENGESELLSCHAFT HOE 81/F 107 Dr. AU/RT

Pestizide S-(1.2.4-Triazol-5-ylmethyl)-(di)-thiophosph(on)ate und Verfahren zu ihrer Herstellung

Gegenstand der Erfindung sind neue Phosphor- bzw. Phosphonsäureester und -esteramide der allgemeinen Formel I, worin

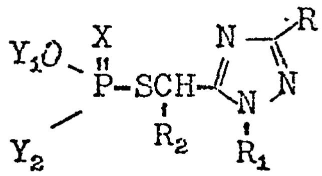 (I),

R = H, $C_1$-$C_6$-Alkyl, durch Halogen, Alkoxy oder Alkylthio substituiertes $C_1$-$C_6$-Alkyl, gegebenenfalls, durch Halogen, Methoxy oder Methyl substituiertes Phenyl, Benzyl oder Phenylethyl oder ($C_1$-$C_4$)-Alkylthio;

$R_1$ = H, $C_1$-$C_6$-Alkyl, $C_3$-$C_7$-Cycloalkyl, Cyanethyl, Benzyl oder $C_3$-$C_5$-Alkenyl,

$R_2$ = H oder Methyl;

X = O oder S;

$Y_1$ = $C_1$-$C_4$-Alkyl und

$Y_2$ = $C_1$-$C_4$-Alkoxy, $C_3$-$C_4$-Alkylthio, $C_1$-$C_4$-Alkylamino, Di-($C_1$-$C_4$-alkyl)amino, $C_1$-$C_4$-Alkyl oder Phenyl

bedeuten, sowie deren Salze mit anorganischen und organischen Säuren.

Die zur Salzbildung befähigten organischen Säuren sind beispielsweise Sulfonsäuren wie die Toluolsulfonsäuren oder die Oxalsäure, oder organische Säuren mit ähnlichem pk-Wert wie die genannten Säuren. Als anorganische Säuren kommen Mineralsäuren wie bspw. Salzsäure in Betracht.

Gegenstand der Erfindung ist weiterhin ein Verfahren zur Herstellung von Verbindungen der Formel I, dadurch gekennzeichnet, daß man 5-Halogenalkyl-1,2,4-triazole der Formel

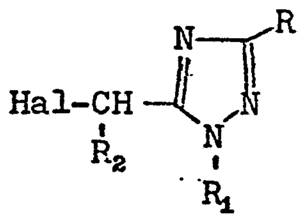

II,

worin Hal Chlor oder Brom bedeutet und R - $R_2$ wie oben definiert sind, oder deren Hydrohalogenide wie bspw. Hydrochloride mit Alkali- bzw. Ammoniumphosph(on)aten der Formel

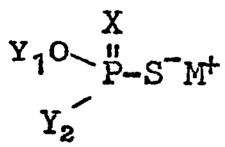

III,

worin $M^+$ Wasserstoff, ein Kation eines Alkalimetalles oder $NH_4^+$ bedeutet, umsetzt. Die Umsetzung von II mit III erfolgt zweckmäßig in einem unter den Reaktionsbedingungen inerten Lösungsmittel bei Temperaturen zwischen 20 °C und der Siedetemperatur des Lösungsmittels, bevorzugt jedoch nicht über 80 °C. Wenn $M^+$ Wasserstoff bedeutet, oder wenn Hydrohalogenide der Verbindungen der Formel II eingesetzt werden, wird außerdem ein säurebindendes Mittel, z.B. ein Alkalicarbonat, Alkalihydroxid, Ammoniak, oder ein Amin wie Triethylamin in mindestens stöchiometrischer Menge zugesetzt; bevorzugt ist Natrium- oder Kaliumcarbonat. Geeignete Lösungsmittel sind Wasser, niedere Alkohole, insbesondere solche, die dem Rest $Y_1$ entsprechen, Ketone

wie Aceton, Methylethylketon, Ether wie THF oder Glykoldimethylether, aromatische Kohlenwasserstoffe wie Benzol, Toluol oder Xylol, Halogenkohlenwasserstoffe wie Dichlormethan, Dichlorethan oder Chlorbenzol, Acetonitril, Dimethylformamid, oder Mischungen daraus.

Die Umsetzungszeit hängt von der Temperatur und dem Lösungsmittel ab und beträgt 1 bis 48 h. Die Verbindungen II und III werden in etwa äquimolaren Mengen genommen, wobei ein Ueberschuß von 5 - 20 % an III vorteilhaft ist.

Die Aufarbeitung erfolgt in üblicher Weise bei mit Wasser mischbaren Lösungsmitteln durch Eingießen in Wasser und Extraktion des Produktes mit einem nicht wassermischbaren Lösungsmittel. Man kann auch vor dem Eingießen in Wasser den größten Teil des Lösungsmittels abdestillieren. Bei Anwendung nicht wassermischbarer Lösungsmittel kann man ungelöste Salze durch Absaugen oder durch Extraktion mit Wasser entfernen. Das Produkt wird dann jeweils durch Eindampfen der organischen Phase, gegebenenfalls nach deren Trocknung, isoliert.

Die Verbindungen der Formel I sind zumeist Oele, die für den angestrebten Verwendungszweck genügend rein sind. Wenn nötig oder erwünscht kann man sie auch durch Andestillieren, d.h. das entfernen flüchtiger Bestandteile im Vakuum, durch Chromatographie oder in einigen Fällen auch durch Destillation mittels eines Dünnschichtverdampfers oder durch Umkristallisieren reinigen.

Die Ausgangsstoffe der Formel II sind nach der Patentanmeldung P 31 18 258.5 erhältlich. Beispiele für geeignete Verbindungen II sind dieser Anmeldung zu entnehmen.

Verbindungen der Formel III sind bekannt.

Die erfindungsgemäßen Verbindungen der Formel I haben eine ausgezeichnete Wirkung gegen saugende und beißende Insekten sowie gegen Arten aus der Ordnung Acarina und Nematoden. Bei Anwendung gegen pflanzenschädigende Insekten, Milben u. Nematoden zeichnen sie sich außer durch Kontakt- und Fraßgiftwirkung auch durch gute Pflanzenverträglichkeit und durch systemische Eigenschaften aus. Daneben sind sie auch gegen Vorratsschädlinge sowie gegen Arten aus der Gruppe der Hygieneschädlinge wirksam.

So können verschiedene Spinnmilbenarten, wie die Obstbaumspinnmilbe (Panonychus ulmi), die Citrusspinnmilbe (Panonychus citri) und die Bohnenspinnmilbe (Tetranychus urticae) gut bekämpft werden.

Viele schädliche Insekten mit saugenden und beißenden Mundwerkzeugen lassen sich mit den erfindungsgemäßen Verbindungen gleichfalls vernichten.

Genannt seien Käfer, wie der Mexikanische Bohnenkäfer (Epilachna varivestis), Kartoffelkäfer (Leptinotarsa decemlineata), Erdfloh-Käfer (Phyllotreta spp.), Erdbeerstengelstecher (Coenorrhinus germanicus), Erdbeerblütenstecher (Anthonomus rubi), Baumwollkapsel-

käfer (Anthonomus grandis), Drahtwürmer (Agriotes spec.),
Schmetterlinge und deren Larven, wie der ägyptische und der altweltliche Baumwollkapselwurm (Earias insulana bzw. Heliothis armigera), Tabakknospenwurm (Heliothis virescens), Wickler, insbesondere Apfelwickler (Carpocapsa pomonella), Eichenwickler (Tortrix viridana), Fruchtschalenwickler (Adoxophyes reticulana), Knospenwickler (Hedya nubifernana), Traubenwickler (Eupoecilia ambiguella), Maiszünsler (Ostrinia nubilalis), Erdraupen (Agrotis spec.), Frostspanner (Operophthera brumata), Nonne (Lymantria monacha),

Außerdem Fliegen, wie die Rübenfliege (Pegomya betae), Mittelmeerfruchtfliege (Ceratitis capitata) und Schaben wie die Deutsche Schabe (Blatta germanica) und die orientalische Schabe (Blatta orientalis) sowie Blattläuse wie die Schwarze Bohnenlaus (Doralis fabae), Grüne Pfirsichblattlaus (Myzus persicae) und Baumwollblattlaus (Aphis gossypii) und Wanzen, z.B. Baumwollwanzen (Oncopeltus fasciatus und Dysdercus spp.). Sie sind gegen alle oder einzelne Entwicklungsstadien normal sensibler und resistenter Arten wirksam.

Weiterhin haben die Verbindungen eine Wirkung gegen pflanzenschädigende Nematoden, beispielsweise gegen solche der Gattungen Meloidogyne, Heterodera, Ditylenchus und Aphelenchoides.

Daneben zeichnen sich einige der erfindungsgemäßen Verbindungen auch durch eine gute Wirkung gegen phytopathogene Pilze aus. Zu nennen sind Piricularia orycae, echte Mehltauarten, Rostpilze, Botrytis cinerea, Rhizoctonia soleni und Pythium ultimum.

Gegenstand der Erfindung sind daher auch insektizide, akarizide, nematizide und fungizide Mittel, gekennzeichnet durch ihren Gehalt an Verbindungen der Formel I neben üblichen Formulierungshilfsmitteln und Inertstoffen, sowie die Verwendung der Verbindungen der Formel I als Mittel zur Bekämpfung von Insekten, Tieren der Ordnung Akarina, Nematoden und Fungi.

Die erfindungsgemäßen Mittel enthalten die Wirkstoffe der Formel I im allgemeinen zu 1 bis 90 Gew.-%. Sie können als Spritzpulver, emulgierbare Konzentrate, versprühbare Lösungen, Stäubemittel oder Granulate in den üblichen Zubereitungen angewendet werden.

Spritzpulver sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxethylierte Fettalkohole, Alkyl- oder Alkylphenyl-sulfonate und Dispergiermittel, z.B. ligninsulfonsaures Natrium, 2,2'-dinaphthylmethan-6,6'-disulfonsaures Natrium, dibutylnaphthalinsulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwandt werden:

/7

Alkylarylsulfonsaure Calziumsalze wie Ca-dodecylbenzolsulfonat, oder nichtionische Emulgatoren wie Fettsäurepolyglykolester, Alkylarylpolyglykolether, Fettalkoholpolyglykolether, Propylenoxid-Ethylenoxid-Kondensationsprodukte, Fettalkohol-Propylenoxid-Ethylenoxid-Kondensationsprodukte, Alkylpolyether, Sorbitanfettsäureester, Polyoxethylen-sorbitanfettsäureester oder Polyoxethylensorbitester.

Stäubemittel erhält man durch Vermahlen des Wirkstoffes mit fein verteilten, festen Stoffen, z.B. Talkum, natürlichen Tonen, wie Kaolin, Bentonit, Pyrophillit oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen auf die Oberfläche von Trägerstoffen, wie Sand, Kaolinite, oder von granuliertem Inertmaterial. Auch können geeignete Wirkstoffe in der für die Herstellung von Düngemittelgranalien üblichen Weise - gewünschtenfalls in Mischung mit Düngemitteln - hergestellt werden.

In Spritzpulvern variiert die Wirkstoffkonzentration z.B. zwischen etwa 10 % und 80 %, der Rest besteht aus den oben angegebenen Formulierungszusätzen. Bei emulgierbaren Konzentraten kann die Wirkstoffkonzentration gleichfalls etwa 10 bis 80 % betragen. Staubförmige Formulierungen enthalten meistens

5 - 20 % an Wirkstoff, versprühbare Lösungen etwa 2 - 20 %. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Zur Anwendung werden die handelsüblichen Konzentrate gegebenenfalls in üblicher Weise verdünnt, z.B. bei Spritzpulvern und emulgierbaren Konzentraten mittels Wasser. Die gebrauchsfertigen Verdünnungen enthalten den Wirkstoff in Konzentrationen von 1 bis 0,0001 %, vorzugsweise von 0,2 bis 0,01 %. Staubförmige und granulierte Zubereitungen sowie versprühbare Lösungen werden vor der Anwendung nicht mehr mit weiteren inerten Stoffen verdünnt. Die erfindungsgemäßen Wirkstoffe können mit anderen Insektiziden, Akariziden und Fungiziden kombimiert werden.

## Herstellungsbeispiele

1. O-Methyl-S-(1,3-dimethyl-1,2,4-triazol-5-ylmethyl)-methyldithiophosphonat

Man löst 5,6 g (35 mmol) Ammonium-O-methyl-methyldithiophosphonat und 4,8 g (33 mmol) 5-Chlormethyl-1,3-dimethyl-1,2,4-triazol in 50 ml THF, rührt einen Tag bei Raumtemperatur und gießt dann auf 200 ml Wasser. Man extrahiert dreimal mit Dichlormethan, trocknet die organischen Phasen und dampft sie im Vakuum ein. Ausbeute 6,9 g (84 %); gelbes Oel mit $n_D^{30}$ = 1,5630.

2. S-(1-n-Butyl-3-methyl-1,2,4-triazol-5-ylmethyl)-O-methyl-ethyldithiophosphonat

Man stellt eine Lösung von 32 mmol O-Methyl-ethyldithiophosphonsäure in Methanol her durch Lösen von 4,0 g (16 mmol) Ethyldithiophosphonsäureanhydrid in 30 ml Methanol. Diese Lösung versetzt man mit 3,5 g Kaliumcarbonat, rührt 1/4 h und dampft dann im Rotationsverdampfer ein. Den Rückstand versetzt man mit 60 ml THF und 5,6 g (30 mmol) 1-Butyl-5-chlormethyl-3-methyl-1,2,4-triazol, rührt zwei Tage bei Raumtemperatur und arbeitet wie bei Beispiel 1 auf. Ausbeute 9,1 g (99 %), oranges Oel mit $n_D^{30}$ = 1,5360.

3. S-(1-Cyclohexyl-3-methyl-1,2,4-triazol-5-ylmethyl)-O,N-dimethyl-amidothiophosphat

6,4 g (30 mmol) 5-Chlormethyl-1-cyclohexyl-3-methyl-1,2,4-triazol und 6,0 g (33 mmol) Kalium-O,N-dimethyl-amidothiophosphat werden in 70 ml THF 6 h unter Rückfluß gerührt und dann wird im Rotationsverdampfer eingedampft. Den Rückstand nimmt man in 100 ml Dichlormethan auf, schüttelt mit 10 ml Wasser, trennt die organische Phase ab, trocknet sie und dampft im Vakuum ein. Ausbeute 8,8 g (92 %), oranges Oel mit $n_D^{30}$= 1,5176.

4. O-Isobutyl-S-(1,3-dimethyl-1,2,4-triazol-5-ylmethyl)-ethyldithiophosphonat

Man löst 4,5 g (18 mmol) Ethyldithiophosphonsäureanhydrid in 60 ml Isobutanol, fügt 5.5 g (40 mmol) Kaliumcarbonat und 4.8 g (33 mmol) 5-Chlormethyl-1.3-dimethyl-1.2.4-triazol zu und rührt einen Tag bei Raumtemperatur. Anschließend arbeitet man wie im Beispiel 1 auf. Ausbeute 10.0 g (99 %), gelbes Oel mit $n_D^{30}$= 1.5245.

5. O-Methyl-S-/1-(1.3-dimethyl-1.2.4-triazol-5-yl)-ethyl/-ethyldithiophosphonat

Man setzt 4,8 g (30 mmol) 5-(1-chlorethyl)-1,3-dimethyl-1,2,4-triazol und 5,7 g (33 mmol) Ammonium-O-methyl-ethyldithiophosphonat analog zu Beispiel 1, jedoch in Acetonitril mit 2 Tagen Reaktionszeit, um. Ausbeute 8,0 g (99 %) gelbes Oel mit $n_D^{30}$= 1,5460.

Analog zu den Beispielen 1 - 5 können folgende Verbindungen erhalten werden:

| Beispiel Nr. | R | $R_1$ | $R_2$ | X | $Y_1$ | $Y_2$ | Brech.-index/ °C |
|---|---|---|---|---|---|---|---|
| 6 | $CH_3$ | $CH_3$ | H | S | $C_2H_5$ | $C_3H_7S$ | |
| 7 * | $CH_3$ | $CH_3$ | H | O | $C_2H_5$ | $C_3H_7S$ | 1,5257/30 |
| 8 | $CH_3$ | $CH_3$ | H | O | $C_2H_5$ | i-$C_3H_7NH$ | 1,5055/30 |
| 9 | $CH_3$ | $CH_3$ | H | O | $C_2H_5$ | $CH_3NH$ | |
| 10 | $CH_3$ | $CH_3$ | H | O | $CH_3$ | $CH_3NH$ | |
| 11 | $CH_3$ | $CH_3$ | H | S | $CH_3$ | $CH_3O$ | zähes Oel |
| 12 | $CH_3$ | $CH_3$ | H | S | $C_2H_5$ | $C_2H_5O$ | 1,5335/30 |
| 13 | $CH_3$ | $CH_3$ | H | O | i-$C_4H_9$ | $CH_3$ | 1,4953/30 |
| 14 | $CH_3$ | $CH_3$ | H | S | $CH_3$ | $C_2H_5$ | 1,5583/30 |
| 15 | $CH_3$ | $CH_3$ | H | S | i-$C_4H_9$ | $C_2H_5$ | 1,5245/30 |
| 16 | $CH_3$ | $CH_3$ | H | S | i-$C_3H_7$ | n-$C_3H_7$ | 1,5330/30 |
| 17 | $CH_3$ | $CH_3$ | H | S | n-$C_3H_7$ | n-$C_3H_7$ | 1,5330/30 |
| 18 | $CH_3$ | $CH_3$ | H | S | n-$C_4H_9$ | $CH_3$ | 1,5394/30 |
| 19 | $CH_3$ | $CH_3$ | H | O | $C_2H_5$ | sec-$C_4H_9S$ | |
| 20 | $CH_3$ | $CH_3$ | H | S | $C_2H_5$ | n-$C_4H_9S$ | |
| 21 | $CH_3$ | $CH_3$ | H | S | $CH_3$ | $C_6H_5$ | |
| 22 | $CH_3$ | $CH_3$ | $CH_3$ | S | $CH_3$ | $CH_3O$ | |
| 23 | $CH_3$ | $CH_3$ | $CH_3$ | S | $C_2H_5$ | $C_2H_5O$ | |
| 24 | $CH_3$ | $CH_3$ | $CH_3$ | S | $C_2H_5$ | $C_3H_7S$ | |
| 25 | $CH_3$ | $CH_3$ | $CH_3$ | O | $C_2H_5$ | $C_3H_7S$ | 1,5215/32 |
| 26 | $CH_3$ | $CH_3$ | $CH_3$ | O | $C_2H_5$ | sec-$C_4H_9S$ | |
| 27 | $CH_3$ | $CH_3$ | $CH_3$ | S | $CH_3$ | $CH_3$ | |
| 28 | $CH_3$ | $CH_3$ | $CH_3$ | S | $C_2H_5$ | $CH_3$ | |
| 29 | $CH_3$ | $CH_3$ | $CH_3$ | S | i-$C_4H_9$ | $CH_3$ | |

/12

* Salz dieser Verbindung mit p-Toluolsulfonsäure : Öl

| Beispiel Nr. | R | $R_1$ | $R_2$ | X | $Y_1$ | $Y_2$ | Brech.-index/ °C |
|---|---|---|---|---|---|---|---|
| 30 | $CH_3$ | $CH_3$ | $CH_3$ | O | i-$C_4H_9$ | $CH_3$ | 1,4975/30 |
| 31 | $CH_3$ | $CH_3$ | $CH_3$ | S | n-$C_4H_9$ | $C_2H_5$ | |
| 32 | $CH_3$ | $CH_3$ | $CH_3$ | S | $CH_3$ | $C_6H_5$ | |
| 33 | $CH_3$ | $C_2H_5$ | H | O | $CH_3$ | $CH_3NH$ | dunkles Öl |
| 34 | $CH_3$ | $C_2H_5$ | H | O | $C_2H_5$ | $C_3H_7S$ | |
| 35 | $CH_3$ | $C_2H_5$ | H | S | $C_2H_5$ | $C_3H_7S$ | |
| 36 | $CH_3$ | $C_2H_5$ | H | O | $CH_3$ | i-$C_3H_7NH$ | |
| 37 | $CH_3$ | $C_2H_5$ | H | S | $CH_3$ | $CH_3$ | |
| 38 | $CH_3$ | $C_2H_5$ | H | S | n-$C_3H_7$ | $C_2H_5$ | |
| 39 | $CH_3$ | $C_2H_5$ | $CH_3$ | S | $C_2H_5$ | $C_2H_5O$ | |
| 40 | $CH_3$ | $C_2H_5$ | $CH_3$ | O | $C_2H_5$ | $C_3H_7S$ | |
| 41 | $CH_3$ | $C_2H_5$ | $CH_3$ | S | $C_2H_5$ | $C_3H_7S$ | |
| 42 | $CH_3$ | $C_2H_5$ | $CH_3$ | S | $CH_3$ | $CH_3$ | |
| 43 | $CH_3$ | $C_2H_5$ | $CH_3$ | S | n-$C_4H_9$ | $C_2H_5$ | |
| 44 | $CH_3$ | $C_2H_5$ | $CH_3$ | O | $C_2H_5$ | $CH_3NH$ | |
| 45 | $CH_3$ | $C_2H_5$ | $CH_3$ | O | $C_2H_5$ | $C_3H_7NH$ | |
| 46 | $CH_3$ | $CH_3$ | $CH_3$ | O | $C_2H_5$ | $C_2H_5NH$ | |
| 47 | $CH_3$ | $CH_3$ | $CH_3$ | O | $C_2H_5$ | i-$C_3H_7NH$ | |
| 48 | $CH_3$ | n-$C_3H_7$ | H | O | $C_2H_5$ | $C_3H_7S$ | |
| 49 | $CH_3$ | n-$C_3H_7$ | H | S | $CH_3$ | $CH_3$ | |
| 50 | $CH_3$ | n-$C_3H_7$ | H | O | $C_2H_5$ | $CH_3NH$ | |
| 51 | $CH_3$ | n-$C_3H_7$ | $CH_3$ | O | $C_2H_5$ | $C_3H_7S$ | |
| 52 | $CH_3$ | n-$C_3H_7$ | $CH_3$ | S | $CH_3$ | $CH_3$ | |
| 53 | $CH_3$ | n-$C_3H_7$ | $CH_3$ | O | $C_2H_5$ | i-$C_3H_7NH$ | |
| 54 | $CH_3$ | i-$C_3H_7$ | H | O | i-$C_4H_9$ | $CH_3$ | 1,4946/30 |
| 55 | $CH_3$ | i-$C_3H_7$ | H | S | $C_2H_5$ | n-$C_3H_7$ | 1,5324/30 |
| 56 | $CH_3$ | i-$C_3H_7$ | H | S | $CH_3$ | $CH_3$ | Fp.84-88°C |

| Beispiel Nr. | R | $R_1$ | $R_2$ | X | $Y_1$ | $Y_2$ | Brech.-index/ °C |
|---|---|---|---|---|---|---|---|
| 57 * | $CH_3$ | i-$C_3H_7$ | H | O | $C_2H_5$ | $C_3H_7S$ | 1,5161/25 |
| 58 | $CH_3$ | i-$C_3H_7$ | H | S | $C_2H_5$ | $C_3H_7S$ | |
| 59 | $CH_3$ | i-$C_3H_7$ | H | O | $C_2H_5$ | $CH_3NH$ | |
| 56 a | $CH_3$ | i-$C_3H_7$ | $CH_3$ | S | $CH_3$ | $CH_3$ | |
| 57 a | $CH_3$ | i-$C_3H_7$ | $CH_3$ | O | $C_2H_5$ | $C_3H_7S$ | |
| 58 a | $CH_3$ | i-$C_3H_7$ | $CH_3$ | O | $C_2H_5$ | $C_2H_5NH$ | |
| 59 a | $CH_3$ | i-$C_3H_7$ | $CH_3$ | S | i-$C_3H_7$ | $C_2H_5$ | |
| 60 | $CH_3$ | n-$C_4H_9$ | H | O | $C_2H_5$ | $C_3H_7S$ | |
| 61 | $CH_3$ | n-$C_4H_9$ | H | S | $CH_3$ | $CH_3$ | |
| 62 | $CH_3$ | n-$C_4H_9$ | H | O | $C_2H_5$ | $CH_3NH$ | 1,5023/30 |
| 63 | $CH_3$ | n-$C_4H_9$ | H | S | $CH_3$ | $CH_3O$ | 1,5490/30 |
| 64 | $CH_3$ | n-$C_4H_9$ | H | O | $C_2H_5$ | $C_2H_5O$ | 1,4895/24 |
| 65 | $CH_3$ | n-$C_4H_9$ | $CH_3$ | S | $CH_3$ | $CH_3$ | |
| 66 | $CH_3$ | n-$C_4H_9$ | $CH_3$ | O | $C_2H_5$ | $C_3H_7S$ | |
| 67 | $CH_3$ | i-$C_4H_9$ | H | S | $CH_3$ | $CH_3$ | |
| 68 | $CH_3$ | i-$C_4H_9$ | H | O | $C_2H_5$ | $C_3H_7S$ | |
| 69 | $CH_3$ | i-$C_4H_9$ | $CH_3$ | S | $C_2H_5$ | $C_3H_7S$ | |
| 70 | $CH_3$ | cyclo-$C_3H_5$ | H | S | $CH_3$ | $CH_3$ | |
| 71 | $CH_3$ | cyclo-$C_3H_5$ | H | O | i-$C_4H_9$ | $CH_3$ | |
| 72 | $CH_3$ | cyclo-$C_3H_5$ | H | S | n-$C_3H_7$ | $C_2H_5$ | |
| 73 | $CH_3$ | cyclo-$C_3H_5$ | H | O | $C_2H_5$ | i-$C_3H_7NH$ | |
| 74 | $CH_3$ | cyclo-$C_3H_5$ | H | O | $C_2H_5$ | $C_3H_7S$ | |
| 75 | $CH_3$ | cyclo-$C_3H_5$ | $CH_3$ | S | $C_2H_5$ | $C_3H_7S$ | |
| 76 | $CH_3$ | cyclo-$C_3H_5$ | $CH_3$ | S | $CH_3$ | $CH_3$ | |
| 78 | $CH_3$ | cyclo-$C_5H_9$ | H | S | $CH_3$ | $CH_3$ | |
| 79 | $CH_3$ | cyclo-$C_5H_9$ | $CH_3$ | O | $C_2H_5$ | $C_3H_7S$ | |
| 80 | $CH_3$ | cyclo-$C_6H_{11}$ | H | O | $CH_3$ | $C_2H_5NH$ | |
| 81 | $CH_3$ | cyclo-$C_6H_{11}$ | H | O | $CH_3$ | $C_2H_5$ | 1,5416/30 |

* Salz dieser Verbindung mit p-Toluolsulfonsäure : Öl
" " " " Oxalsäure : Öl

/14

| Beispiel Nr. | R | $R_1$ | $R_2$ | X | $Y_1$ | $Y_2$ | Brech.-index/ °C |
|---|---|---|---|---|---|---|---|
| 82 | $CH_3$ | cyclo-$C_6H_{11}$ | H | S | $C_2H_5$ | $CH_3$ | 1,5495/20 |
| 83 | $CH_3$ | cyclo-$C_6H_{11}$ | $CH_3$ | S | $CH_3$ | $CH_3$ | |
| 84 | $CH_3$ | cyclo-$C_6H_{11}$ | H | O | $C_2H_5$ | $C_3H_7S$ | |
| 85 | $CH_3$ | $CH_2CH_2CN$ | H | S | $CH_3$ | $CH_3$ | 1,5663/21 |
| 86 | $CH_3$ | $CH_2CH_2CN$ | H | O | $C_2H_5$ | $C_2H_5NH$ | |
| 87 | $CH_3$ | $CH_2CH_2CN$ | H | O | $C_2H_5$ | $C_3H_7S$ | |
| 88 | $CH_3$ | $CH_2CH_2CN$ | H | S | i-$C_4H_9$ | $C_3H_7$ | |
| 89 | $CH_3$ | $CH_2CH_2CN$ | $CH_3$ | S | $C_2H_5$ | $CH_3$ | |
| 90 | $CH_3$ | $CH_2CH_2CN$ | $CH_3$ | O | $C_2H_5$ | $C_3H_7S$ | |
| 91 | $CH_3$ | $CH_2CH_2CN$ | $CH_3$ | O | $C_2H_5$ | i-$C_3H_7NH$ | |
| 92 | $C_2H_5$ | $CH_3$ | H | S | $CH_3$ | $CH_3$ | |
| 93 | $C_2H_5$ | $CH_3$ | H | O | $C_2H_5$ | $CH_3NH$ | 1,5082/30 |
| 94 | $C_2H_5$ | $CH_3$ | H | S | $CH_3$ | $CH_3O$ | 1,5412/30 |
| 95 | $C_2H_5$ | $CH_3$ | H | O | $C_2H_5$ | $C_2H_5O$ | 1,4937/30 |
| 96 | $C_2H_5$ | $CH_3$ | H | O | $C_2H_5$ | $C_3H_7S$ | |
| 97 | $C_2H_5$ | $CH_3$ | H | S | n-$C_4H_9$ | $C_2H_5$ | |
| 98 | $C_2H_5$ | $CH_3$ | H | S | $C_2H_5$ | $C_3H_7S$ | |
| 99 | $C_2H_5$ | $CH_3$ | H | O | $C_2H_5$ | i-$C_3H_7NH$ | |
| 100 | $C_2H_5$ | $CH_3$ | $CH_3$ | S | $CH_3$ | $CH_3$ | |
| 101 | $C_2H_5$ | $CH_3$ | $CH_3$ | O | $C_2H_5$ | $C_3H_7S$ | |
| 102 | $C_2H_5$ | $CH_3$ | $CH_3$ | O | $CH_3$ | $CH_3NH$ | |
| 103 | $C_2H_5$ | $CH_3$ | $CH_3$ | O | $CH_3$ | sec-$C_4H_9S$ | |
| 104 | i-$C_3H_7$ | $CH_3$ | H | S | $CH_3$ | $CH_3$ | |
| 105 | i-$C_3H_7$ | $CH_3$ | H | O | $C_2H_5$ | $C_3H_7S$ | |
| 106 | i-$C_3H_7$ | $CH_3$ | H | O | $C_2H_5$ | i-$C_3H_7NH$ | |
| 107 | i-$C_3H_7$ | $CH_3$ | $CH_3$ | S | $CH_3$ | $CH_3$ | |
| 108 | i-$C_3H_7$ | $CH_3$ | $CH_3$ | O | $C_2H_5$ | $C_3H_7S$ | |
| 109 | n-$C_4H_9$ | $CH_3$ | H | S | $CH_3$ | $CH_3$ | |

/15

| Beispiel Nr. | R | $R_1$ | $R_2$ | X | $Y_1$ | $Y_2$ | Brech.-index/ °C |
|---|---|---|---|---|---|---|---|
| 110 | n-$C_4H_9$ | $CH_3$ | H | O | $C_2H_5$ | $C_3H_7S$ | |
| 111 | n-$C_4H_9$ | $CH_3$ | $CH_3$ | S | $CH_3$ | $CH_3$ | |
| 112 | n-$C_4H_9$ | $CH_3$ | $CH_3$ | O | $C_2H_5$ | $C_3H_7S$ | |
| 113 | H | $CH_3$ | $CH_3$ | S | $CH_3$ | $CH_3$ | |
| 114 | H | $CH_3$ | H | O | $C_2H_5$ | $C_3H_7S$ | Öl |
| 115 | H | $CH_3$ | H | O | $C_2H_5$ | i-$C_3H_7NH$ | |
| 116 | H | i-$C_3H_7$ | H | S | $CH_3$ | $CH_3$ | |
| 117 | $C_6H_5$ | $CH_3$ | H | O | $C_2H_5$ | i-$C_3H_7NH$ | Fp.96-99 |
| 118 | $C_6H_5$ | $CH_3$ | H | S | $CH_3$ | $CH_3O$ | 1.5856/30 |
| 119 | $C_6H_5$ | $CH_3$ | H | S | $CH_3$ | $CH_3$ | 1.6026/30 |
| 120 | $C_6H_5$ | $CH_3$ | $CH_3$ | O | $C_2H_5$ | $C_3H_7S$ | |
| 121 | $C_6H_5$ | $CH_3$ | H | O | $C_2H_5$ | $C_3H_7S$ | |
| 122 | t-$C_4H_9$ | $CH_3$ | H | O | $C_2H_5$ | $C_3H_7S$ | |
| 123 | t-$C_4H_9$ | $CH_3$ | H | S | $CH_3$ | $CH_3$ | |
| 124 | t-$C_4H_9$ | $CH_3$ | $CH_3$ | O | $C_2H_5$ | $C_3H_7S$ | |
| 125 | t-$C_4H_9$ | $CH_3$ | $CH_3$ | S | $CH_3$ | $CH_3$ | |
| 126 | $CH_3OCH_2CH_2$ | $CH_3$ | H | S | $CH_3$ | $CH_3$ | |
| 127 | i-$C_3H_7OCH_2CH_2$ | $CH_3$ | H | S | $CH_3$ | $CH_3$ | |
| 128 | i-$C_3H_7OCH_2CH_2$ | $CH_3$ | $CH_3$ | O | $C_2H_5$ | $C_3H_7S$ | |
| 129 | $CH_3SCH_2CH_2$ | $CH_3$ | H | S | $CH_3$ | $CH_3$ | |
| 130 | $CH_3SCH_2CH_2$ | $CH_3$ | $CH_3$ | S | $CH_3$ | $CH_3$ | |
| 131 | $ClCH_2C(CH_3)_2$ | $CH_3$ | H | S | $CH_3$ | $CH_3$ | |
| 132 | $ClCH_2C(CH_3)_2$ | $CH_3$ | H | O | $C_2H_5$ | $C_3H_7S$ | |
| 133 | $ClCH_2C(CH_3)_2$ | $CH_3$ | $CH_3$ | O | $C_2H_5$ | $C_3H_7S$ | |
| 134 | $CH_3OCH_2CH(CH_3)$ | $CH_3$ | H | O | $C_2H_5$ | $C_3H_7S$ | |
| 135 | $CH_3OCH_2CH(CH_3)$ | $CH_3$ | $CH_3$ | O | $C_2H_5$ | $C_3H_7S$ | |
| 136 | $C_6H_5CH_2$ | $CH_3$ | H | S | $CH_3$ | $CH_3$ | 1.5817/30 |

/16

| Bei-spiel Nr. | R | $R^1$ | $R^2$ | X | $Y_1$ | $Y_2$ | Brech.-index/ °C |
|---|---|---|---|---|---|---|---|
| 137 | $C_6H_5CH_2$ | $CH_3$ | $CH_3$ | S | $CH_3$ | $CH_3$ | |
| 138 | $C_6H_5CH_2$ | $CH_3$ | H | O | $C_2H_5$ | $C_3H_7S$ | |
| 139 | $C_6H_5CH_2$ | $CH_3$ | $CH_3$ | O | $C_2H_5$ | $C_3H_7S$ | |
| 140 | $4\text{-}Cl\text{-}C_6H_4CH_2$ | $CH_3$ | H | S | $CH_3$ | $CH_3O$ | 1,5870/30 |
| 141 | $4\text{-}Cl\text{-}C_6H_4CH_2$ | $CH_3$ | H | S | $CH_3$ | $CH_3$ | |
| 142 | $4\text{-}Cl\text{-}C_6H_4CH_2$ | $CH_3$ | H | O | $C_2H_5$ | $C_3H_7S$ | |
| 143 | $C_6H_5CH_2CH_2$ | $CH_3$ | $CH_3$ | S | $CH_3$ | $CH_3O$ | |
| 144 | $C_6H_5CH_2CH_2$ | $CH_3$ | H | O | $C_2H_5$ | $C_3H_7S$ | |
| 145 | $C_6H_5CH(CH_3)$ | $CH_3$ | H | O | $C_2H_5$ | $C_3H_7S$ | |
| 146 | $C_6H_5CH(CH_3)$ | $CH_3$ | $CH_3$ | S | $CH_3$ | $CH_3$ | |
| 147 | H | $i\text{-}C_3H_7$ | H | S | $CH_3$ | $C_2H_5$ | 1,5373/24 |
| 148 | H | $i\text{-}C_3H_7$ | H | O | $C_2H_5$ | $C_3H_7S$ | 1,5200/23 |
| 149 | $CH_3$ | $i\text{-}C_3H_7$ | H | S | $CH_3$ | $OCH_3$ | 1,5405/25 |
| 150 | $CH_3$ | $i\text{-}C_3H_7$ | H | O | $C_2H_5$ | $OC_2H_5$ | 1,4891/25 |
| 151 | $CH_3$ | $i\text{-}C_3H_7$ | H | O | $C_2H_5$ | $i\text{-}C_3H_7NH$ | 1,4961/25 |
| 152 | $CH_3S$ | H | H | O | $C_2H_5$ | $i\text{-}C_3H_7NH$ | öl |
| 153 | $CH_3S$ | H | H | O | $C_2H_5$ | $C_3H_7S$ | öl |
| 154 | H | H | H | O | $C_2H_5$ | $C_3H_7S$ | 1,5381/20 |
| 155 | H | $CH_2\text{-}CH{=}CH_2$ | H | O | $C_2H_5$ | $i\text{-}C_3H_7NH$ | 1,5096/24 |
| 156 | H | $CH_2\text{-}CH{=}CH_2$ | H | O | $C_2H_5$ | $C_3H_7S$ | 1,5350/24 |
| 157 | H | $CH_2\text{-}CH{=}CH_2$ | H | O | $i\text{-}C_4H_9O$ | $CH_3$ | 1,5080/24 |
| 158 | H | $CH_2C_6H_5$ | H | O | $C_2H_5$ | $i\text{-}C_3H_7NH$ | 1,5417/24 |
| 159 | H | $CH_2C_6H_5$ | H | S | $C_2H_5$ | $CH_3$ | 1,5881/24 |
| 160 | $CH_3S$ | $C_2H_5$ | H | O | $C_2H_5$ | $C_3H_7S$ | 1,5510/23 |
| 161 | $CH_3S$ | $C_2H_5$ | H | S | $C_2H_5$ | $CH_3$ | öl |

0065216

Formulierungsbeispiele

6 g Wirkstoff werden mit 6 g hochdisperser Kieselsäure vorgemahlen und anschließend mit 48 g einer Mischung, enthaltend 13,3 % Zellpech, 65,4 % (R)Sillithin Z (Quarz + Al-Silikat), 15,3 % hochdisperse Kieselsäure, 4,7 % Polypropylenglykol P 750 und 1,3 % Oleoylmethyltaurid-Na im Mixer vermengt. Man erhält so 60 g eines 10 %-igen Spritzpulvers.

Emulsionskonzentrat

2 g Wirkstoff, 16 g Cyclohexanon und 2 g Nonylphenoldekaglykolether werden miteinander vermisch. Man erhält 20 g eines 10 %-igen Emulsionskonzentrates.

## Biologische Beispiele

### Beispiel I

Mit Bohnenspinnmilben (Tetranychus urticae, normal sensibel) stark befallene Bohnenpflanzen (Phaseolus vulgaris) wurden mit der wäßrigen Verdünnung eines Spritzpulverkonzentrates, die 0,0125 Gew.-% des Wirkstoffs aus Beispiel 1 enthielt, bis zum Stadium des beginnenden Abtropfens gespritzt. Bei der mikroskopischen Kontrolle acht Tage nach der Behandlung zeigte sich, daß alle beweglichen und unbeweglichen Stadien der Population getötet waren.

In gleicher Weise geprüft, erwiesen sich die Verbindungen gemäß Beispiel 2, 4, 7, 8, 12 - 18, 33, 54 - 57, 62, 64, 81, 82, 85, 93, 95, 114, 136, 147, 148, 150, 151, 155, 156, 159 und 57-p-Tosylat als ebenso wirksam.

### Beispiel II

Mit Kundebohnenblattläusen (Aphis craccivora) stark besetzte Ackerbohnen (Vicia faba) wurden mit der wäßrigen Suspension eines Spritzpulverkonzentrates, die 0,0125 Gew.-% des Wirkstoffes aus Beispiel 1 enthielt, bis zum Stadium des Abtropfens gespritzt. Nach Aufstellung der Pflanzen im Gewächshaus wurde drei Tage nach der Behandlung eine 100 %ige Abtötung der Versuchstiere festgestellt. Ebenso wirksam erwiesen sich die Verbindungen gemäß Beispiel 2, 4, 7, 8, 12 - 18, 33, 54 - 57, 62, 64, 81, 82, 85, 93, 95, 114, 117 - 119, 136, 147, 148, 150, 151, 154 - 159, 7-p-Tosylat, 57-p-Tosylat und 57-Oxalat.

### Beispiel III

Wurzelballen von getopften Ackerbohnen (vicia faba) wurden mit Folie umgeben und nach Infektion mit Kundebohnenblattläusen (Aphis craccivora) erfolgte eine Behandlung durch gleichmäßige Verteilung von 0,25 mg

des jeweiligen Wirkstoffes im Wurzelbereich. 8 Tage nach der Behandlung konnte für die in den Beispielen 1, 4, 7-p-Tosylat, 8, 12, 14, 15, 18, 33, 56, 93, 95, 147, 150 und 151 genannten Verbindungen jeweils 100 % Mortalität festgestellt werden.

Beispiel IV

Eine staubförmige Formulierung wurde mit Erde gemischt, die mit Meloidogyne incognita verseucht war. Anschließend erfolgte das Abfüllen in Töpfe und die Bepflanzung dieser mit Toamten. Nach einer Standzeit von 4 Wochen im Gewächshaus wurden die Wertzahlen nach folgendem Schema ermittelt:

| Gallen/Pflanze | Wertzahl |
|---|---|
| 0 | 1 |
| 1 - 2 | 2 |
| 3 - 5 | 3 |
| 6 - 10 | 4 |
| . | . |
| . | . |
| . | . |
| über 150 | 9 |

ad Beispiel IV

In folgender Tabelle ist die Wirksamkeit der folgenden Präparate dargestellt:

0065216

Tabelle

| Präparat gemäß Beispiel | Wirkstoffemenge/ Flächeneinheit kg / ha | Wertzahl |
|---|---|---|
| Unbehandelte Probe | | 9 |
| 8 | 20 | 1 |
| 14 | 20 | 1 |
| 33 | 20 | 1 |
| 62 | 20 | 1 |
| 117 | 20 | 1 |
| 147 | 20 | 1 |
| 155 | 20 | 1 |

Beispiel V

Die Verbindung nach Beispiel 1 wurde als Wirkstoff in Aceton mit einer Konzentration von 0,025 Gew.-% gleichmäßig auf die Innenseiten des Deckels und des Bodens einer Petrischale aufgetragen und abtrocknen lassen. Danach wurden je Petrischale 10 Larven (L 4) der Deutschen Schabe (Blatella germanica) eingesetzt, die Schalen mit dem Deckel verschlossen und nach 72 Stunden eine 100 % Abtötung der Versuchstiere festgestellt.

Als ebenso wirksam erwiesen sich die Verbindungen gemäß Beispiel 4, 12, 13, 13, 14, 15, 18, 56, 57, 82, 85, 117, 148, 154, 7-p-Tosylat, 57-Oxalat.

Beispiel VI

Blätter der Bohne (Phaseolus vulgaris) wurden mit einer wäßrigen Emulsion der Verbindung aus Beispiel I in einer Konzentration von 0,025 Gew.-% (bezogen auf Wirkstoff) behandelt und zu gleich behandelten Larven des Mexikanischen Bohnenkäfers (Epilachna varivestis) in Beobachtungskäfige gestellt. Eine Auswertung nach 48 Stunden ergab eine 100 % Abtötung der Versuchstiere.

Als ebenso wirksam erwiesen sich die Verbindungen gemäß Beispiel 4, 7, 12, 14, 16, 18, 56, 81, 85, 95, 114, 118, 119, 136, 147, 148, 156, 159, 7-p-Toxylat, 57-p-Tosylat und 57-Oxalat.

Patentansprüche:

1. Phosphor- bzw. Phosphonsäureester und -esteramide der allgemeinen Formel I, worin

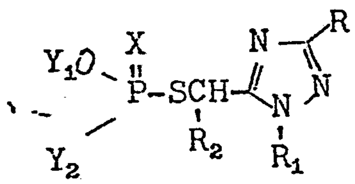

I

R = H, $C_1$-$C_6$-Alkyl, durch Halogen, Alkoxy oder Alkylthio substituiertes $C_1$-$C_6$-Alkyl, gegebenenfalls durch Halogen, Methoxy oder Methyl substituiertes Phenyl, Benzyl oder Phenylethyl, ($C_1$-$C_4$)-Alkylthio;

$R_1$ = H, $C_1$-$C_6$-Alkyl, $C_3$-$C_7$-Cycloalkyl, Cyanethyl, Benzyl, oder $C_3$-$C_5$-Alkenyl

$R_2$ = H oder Methyl,

X = O oder S,

$Y_1$ = $C_1$-$C_4$-Alkyl und

$Y_2$ = $C_1$-$C_4$-Alkoxy, $C_3$-$C_4$-Alkylthio, $C_1$-$C_4$-Alkylamino, Di-($C_1$-$C_4$-alkyl)amino, $C_1$-$C_4$-Alkyl oder Phenyl bedeuten,

sowie deren Salze mit anorganischen und organischen Säuren.

2. Phosphor- bzw. Phosphonsäureester und -esteramide der allgemeinen Formel I

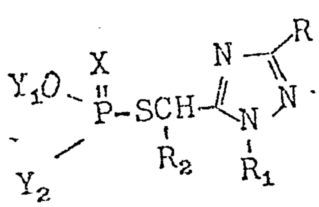

I

worin R = H, $C_1$-$C_6$-Alkyl, durch Halogen, Alkoxy oder Alkylthio substituiertes $C_1$-$C_6$-Alkyl, gegebenenfalls durch Halogen, Methoxy oder Methyl substituiertes

Phenyl, Benzyl oder Phenylethyl;

$R_1$ = $C_1$-$C_6$-Alkyl, $C_3$-$C_7$-Cycloalkyl, Cyanethyl;

$R_2$ = H oder Methyl;

X = O oder S;

$Y_1$ = $C_1$-$C_4$-Alkyl und

$Y_2$ = $C_1$-$C_4$-Alkoxy, $C_3$-$C_4$-Alkylthio, $C_1$-$C_4$-Alkylamino, Di-($C_1$-$C_4$-alkyl)amino, $C_1$-$C_4$-Alkyl oder Phenyl

bedeuten.

3. Verfahren zur Herstellung von Verbindungen der Formel I, gemäß Ansprüchen 1 und 2, dadurch gekennzeichnet, daß man 5-Halogenalkyl-1,2,4-triazole der Formel II

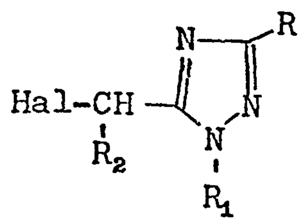

II

worin Hal Chlor oder Brom bedeutet und R - $R_2$ wie oben definiert sind, oder ggf. deren Hydrohalogenide mit Alkali- bzw. Ammoniumphosph(on)aten der Formel III

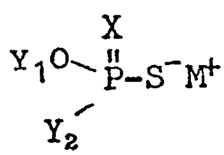

III

worin $M^+$ Wasserstoff, ein Kation eines Alkalimetalles oder $NH_4^+$ bedeutet, ggf. unter Zusatz eines säurebindenden Mittels, umsetzt.

4. Insektizide, akarizide, nematozide und fungizide Mittel, gekennzeichnet durch einen Gehalt an einer Verbindung der Formel I gemäß Ansprüchen 1 und 2.

5. Verwendung von Verbindungen der Formel I gemäß Ansprüchen 1,2, 4 zur Bekämpfung von schädlichen Insekten, Akariden, Nematoden und phytopathogenen Pilzen.

6. Verfahren zur Bekämpfung von schädlichen Insekten, Akariden, Nematoden und phytopathogenen Pilzen, dadurch gekennzeichnet, daß man eine wirksame Menge einer Verbindung der Formel I gemäß Ansprüchen 1,2, 4 auf die zu behandelnde Fläche bzw. die befallenen Pflanzen aufbringt.

Europäisches Patentamt

# EUROPÄISCHER RECHERCHENBERICHT

0065216

Nummer der Anmeldung

EP 82 10 3888

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| Y | BE-A- 644 164 (FARBENFARBIKEN BAYER)<br>* Insgesamt *<br>--- | 1,4-6 | C 07 F 9/65<br>A 01 N 57/16<br>A 01 N 57/24<br>A 01 N 57/32 |
| Y | US-A-3 767 666 (J. ZIELINSKI)<br>* Insgesamt *<br>----- | 1,4-6 | |
| | | | RECHERCHIERTE SACHGEBIETE (Int. Cl. 3) |
| | | | C 07 F 9/00 |

Der vorliegende Recherchenbericht wurde für alle Patentansprüche erstellt.

| Recherchenort | Abschlußdatum der Recherche | Prufer |
|---|---|---|
| DEN HAAG | 02-08-1982 | BESLIER L.M. |

KATEGORIE DER GENANNTEN DOKUMENTEN

X : von besonderer Bedeutung allein betrachtet
Y : von besonderer Bedeutung in Verbindung mit einer anderen Veroffentlichung derselben Kategorie
A : technologischer Hintergrund
O : nichtschriftliche Offenbarung
P : Zwischenliteratur
T : der Erfindung zugrunde liegende Theorien oder Grundsatze

E : älteres Patentdokument, das jedoch erst am oder nach dem Anmeldedatum veroffentlicht worden ist
D : in der Anmeldung angeführtes Dokument
L : aus andern Gründen angeführtes Dokument

& : Mitglied der gleichen Patentfamilie, übereinstimmendes Dokument